# EUROPEAN PATENT SPECIFICATION

(11) **EP 0 449 594 B1**
(45) Date of publication and mention of the grant of the patent: **13.09.1995**
(21) Application number: 91302650.6
(22) Date of filing: 26.03.1991
(51) Int. Cl.: A23L 1/0526, A23L 1/308

(54) **Extensively depolymerised guar as a bulking agent for foods**
Weitgehend depolymerisierter Guar als Füllstoff für Nahrungsmittel
Guar largement dépolymérisé comme agent de charge pour produits alimentaires

(30) Priority: 27.03.1990 US 499696
(43) Date of publication of application: 02.10.1991
(73) Proprietor: STEIN, HALL & CO., INC., Jeffersontown, Kentucky 40299 (US)
(72) Inventor: Hines, George D., Mercerville, New Jersey 08619 (US)
(74) Representative: De Minvielle-Devaux, Ian Benedict Peter

(56) References cited:
- EP-A- 0 457 098
- GB-A- 1 072 029
- US-A- 4 024 290
- G.O.PHILLIPS 'Gums and stabilisers for the food industry (5)' July 1989 , IRLPRESS , OXFORD, GB pp.383-403
- PATENT ABSTRACTS OF JAPAN vol. 013, no. 199 (C-594)11 May 1989 & JP-A-01 020 063 (NISSHIN FLOUR MILLING) 24.01.1989
- WORLD PATENTS INDEX LATEST Section Ch, Week 9046, 1990Derwent Publications Ltd., London, GB; Class D, AN 90-344618 (46)& JP-A-2 248 401 (GODO SHUSEI) 4October 1990

## Description

### Field of the Invention

The field of art to which this invention is directed is low caloric food or edible materials. In particular, this invention is directed to bulking agents for food.

### Background of the Invention

According to many nutritional experts, modern man's diet contains too many calories and not enough fiber. For this reason there is a market demand for low-calorie food products and high-fiber content foods. In some instances, calorie reduction per serving is obtained by simply reducing the size of the edible portion, for example thin sliced bread. In most instances, however, calorie reduction is obtained by including a non-assimilable material in the food product. Increased fiber content is obtained by adding bran, e.g. oat bran, to the diet or by using fibers in the formulation of food products themselves.

There is an increased need for low-cost bulking agents suitable for use in foods. For example, there are high-intensity sweeteners available to replace the taste of sucrose. However, sucrose does more than simply provide a sweet taste for food products. It provides texture, moisture-retention properties, density and appearance to the food. Agents are needed to be used with high-intensity sweeteners to replace the bulk of sucrose so as to retain the above-stated desirable properties in the food products. Preferably, the agent should be low in calorie content and be non-assimilable or nondigestible. Most preferably, the agent should be high in fiber content as well.

Food technologists routinely use nonnutritive polymers in the formulation of food products. Most such nonnutritive polymers which are added directly to food are hydrophilic colloids or gums. Usually such gums are polysaccharides. Examples of such gums are gum arabic, ghatti, karaya, guar gum, locust-bean gum, agar, alginate, and carrageenan.

Nonnutritive gums perform such functions as gelation, thickening, texture modification, inhibition of crystallization, stabilization of emulsions and suspensions, surface-tension control, and encapsulation of flavor oils. These functions are based primarily on the water-binding, high viscosity, and film forming properties of these polymers.

Because the glycosidic linkages of natural gums are resistant to small-intestinal digestion, gums are considered sources of water-soluble dietary fiber. Water-soluble dietary fiber has been defined as plant material which is not degraded by the endogenous secretions of the human digestive tract. The ideal soluble fiber for food additives, particularly liquid products, must be extremely low in viscosity, tasteless and odorless.

Guar gum has found extensive uses as a food additive. US-A-3,843,818 discloses low calorie pastas made with guar gum, cereal material, vegetable protein and water. Guar gum, either alone or combined with other gums, as described in US-A-3,996,389, has been used as a stabilizer for ice cream, ice milk and sherbet. Culinary mixes containing guar gum are described in US-A-3,161,524. A process for producing low odor, low taste guar gums useful in foods is described in US-A-3,455,899.

Guar gum is a high-molecular-weight polysaccharide which, when dissolved in water, forms very high viscosity solutions or gels at concentrations as low as 1 percent. Due to the high molecular weight, and resulting high viscosity aqueous solutions, guar gum has found limited utility as a bulking agent for food.

### Summary of Invention

In one aspect this invention relates to the use of extensively depolymerised guar as a bulking agent for food. In another aspect, this invention pertains to bulking agents for food which contain extensively depolymerised guar.

This invention provides a food product containing an effective amount of extensively depolymerised guar, said guar having a weight average molecular weight of less than about 50,000 and/or forming a solution in water which at 25 weight percent concentration has a viscosity of less than about 1000 cps (mPa.s) at 25°C.

One exemplary food product is a sugar replacement composition comprising the extensively depolymerised guar and an artificial or non-sugar sweetener; the amount of the sweetener can be selected to give the composition a sweetness substantially equivalent to that of sucrose.

Another exemplary food product is a dry mix, e.g. a cake or cookie mix, comprising the extensively depolymerised guar; typically, the product contains at least one other ingredient selected from flour, shortening, egg solids, flavouring agents and artificial or non-sugar sweetener, although other ingredients are not, of course, precluded. The amount of artificial or non-sugar sweetener, if present, can be selected such that the said guar and sweetener, taken together, have a sweetness substantially equivalent to that of sucrose.

### Description of preferred embodiments.

The bulking agent used in this invention is extensively depolymerised guar made by the acid hydrolysis of guar gum.

Guar gum is an edible carbohydrate polymer containing galactose and mannose as the structural building blocks. The ratio of the two components may vary slightly depending on the origin of the guar seed, but the gum is generally considered to contain one galactose unit for every two mannose units.

The production of guar gum comprises a series of crushing, sifting and grinding steps to separate the seeds from the pods and then to separate the endosperm, which contains the gum, from the seeds. The endosperm is ground to a fine powder and is marketed as guar gum.

Guar gum has the status of a direct food additive. Gum which meets Food Chemical Codex specifications is affirmed as GRAS as a direct food additive under FDA (United States Food and Drug Administration) regulation 194.1339.

Guar gum forms viscous solutions in water having viscosities which vary from about 2500 to about 5000 cps (mPa.s) as 1 weight percent solutions in water at 25°C.

Various methods for reducing the viscosity of guar gum, starch, cellulose and the like are described in such United States patents as US-A-2,767,167; US-A-2,086,701; US-A-2,393,095 and US-A-2,553,485.

The extensively depolymerised guar used in this invention may be made by the acid hydrolysis of guar powder. The hydrolysis may be conducted by contacting the guar with from about 1 to about 2 weight percent hydrogen chloride applied at a concentration in water of from about 30 to about 38 weight percent hydrogen chloride. The acid treated powder is then heated at from about 125 to about 160°F (52°-71°C) for a time sufficient to obtain a low viscosity product. Generally, this time will vary from about 2 to about 12 hours.

The acid treated guar is then stirred into water at 25-30 weight percent concentration. The resulting solution is neutralised with sodium hydroxide or potassium hydroxide and is centrifuged and/or filtered to clarify the solution. The clear supernatant liquid is then dried to recover the extensively depolymerised guar in powder form.

As an alternative process, the extensively depolymerised guar can be recovered from the clarified solution by alcohol (in particular ethanol or isopropanol) precipitation.

The extensively depolymerised guar forms solutions in water which have viscosities of less than 1000 cps (mPa.s) at 25 weight percent concentration of the guar in the solution measured at 25°C. Preferably, the viscosities will be less than about 500 cps (mPa.s). Most preferably, the viscosities will be between about 50 and about 200 cps (mPa.s). The weight average molecular weight, as measured by size exclusion chromotography using 10,000 molecular weight dextran as a standard, is less than about 50,000.

As stated herein, the extensively depolymerised guar finds use in low caloric foods as a bulking agent. It finds particular use as a replacement for the bulk of sugar when a low calorie sugar substitute is used. There are a number of non-sugar sweeteners which can be substituted for sugar to provide equivalent or near-equivalent sweetening characteristics in various products. Such sweeteners are the dipeptide sweeteners, e.g. aspartame, saccharin, cyclomate, Acesulfame - K, and the like. However, due to the extreme sweetness potency of these sugar substitutes, which range anywhere from 100 to 300 or more times as sweet as sucrose, simple replacement of sugar in various recipes and formulations with a sweetness equivalent amount of the sweeteners often involves the elimination of a considerable portion of the sugar-sweetened product. The extensively depolymerised guar is useful as a bulking agent, i.e. the guar serves as a low calorie replacement for the sugar bulk.

The extensively depolymerised guar can be blended with the artificial sweetener and this blend can be used as a direct replacement for sugar. The amount of sweetener used in the blend will vary depending on the particular sweetener that is used. Anyone skilled in the art who knows the sweetness potency of the sweetener in relation to sucrose can readily calculate the amount of sweetener that must be blended with the extensively depolymerised guar to obtain a direct replacement sugar substitute. For example, a sweetener which is 100 times as sweet as sucrose will be used in the amount of 1 weight percent based on the weight of the blend.

The sweetener can of course be a mixture of suitable compounds.

Since extensively depolymerised guar is a fine powder and is not granular, the sugar substitute blends do not have the appearance of sugar even though they have the same sweetness. The preferred way to use the extensively depolymerised guar in food products is to add it when the product is formulated. The extensively depolymerised guar can be added to cake and cookie (or biscuit) mixes, pudding mixes, whipped topping mixes and patissery products to replace all or a portion of the bulk of sugar that is ordinarily used on the mixes.

According to this invention, extensively depolymerised guar can be used to replace usually from about 10 to 100 percent of sugar used in the formulation of food products. Preferably, the extensively depolymerised guar is used to replace from about 40 to about 60 percent of the sugar in such products. Although the extensively depolymerised guar can be used as a direct additive to the food product, e.g. cake batter, it is preferred to use the extensively depolymerised guar in formulating dry mixes which are sold to the consumer.

The following examples illustrate the use of extensively depolymerised guar in cake mixes as a replacement for sugar bulk which contributes to the viscosity of the batter, and to the textures and appearance of the baked goods. No attempt was made to replace the sweetness of sugar with an artificial sweetener. In these examples, 1 cup = 237 cm³ and 1 teaspoon = 5 cm³.

The extensively depolymerised guar (EDG) used in the examples had the following viscosities in aqueous solutions.
- EDG I: - clarified and precipitated by ethanol 35 percent solids - 15 cps (mPa.s)
- EDG II: - clarified and precipitated by ethanol 44 percent solids - 117 cps (mPa.s)

### Example A

A yellow cake recipe to be used as the control is as follows:

| | |
|---|---|
| Self-raising flour | 2 cups |
| Shortening | 1/2 cup |
| Milk | 1 cup |
| Vanilla | 1 teaspoon |
| Eggs | 3 |
| Sugar | 1 1/2 cups |

The batter has a viscosity of 9000 cps (mPa.s) as measured with a Brookfield viscometer at 20 rpm. The batter is poured into metal cup cake tins and is baked for 30 minutes at 350°F (177°C).

### Example 1

A cake batter is made from the following components:

| | |
|---|---|
| Self-raising flour | 1 cup |
| Shortening | 1/2 cup |
| Milk | 1 cup |
| Vanilla | 1 teaspoon |
| Eggs | 3 |
| EDG I | 3/4 cup |

The control recipe is varied by removing all of the sugar and 1/2 of the flour and adding extensively depolymerised guar (EDG) in the amount of 1/2 the volume of sugar in the control recipe.

A further cake batter is made using the same recipe except EDG II is used.

The batter had the following viscosity

| | |
|---|---|
| Batter with EDG I | 14,000 cps (mPa.s) |
| Batter with EDG II | 8,000 cps (mPa.s) |

Each batter is poured into metal cup cake tins and is baked for 30 minutes at 350°F (177°C). Both cakes have a bread-like consistency and are slightly gummy.

### Example 2

The same recipe as the control is used except all of the sugar is replaced with EDG I in one instance and EDG II in the other instance in the amount of 1/2 the volume of the replaced sugar.

| | |
|---|---|
| Self-raising flour | 2 cups |
| Shortening | 1/2 cup |
| Milk | 1 cup |
| Vanilla | 1 teaspoon |
| Eggs | 3 |
| EDG | 3/4 cup |

The batter using EDG I has a viscosity of 32000 cps (mPa.s). The batter with EDG II has a viscosity of 21,000 cps (mPa.s). Cakes made from both batters using the procedure described in Example A have fair texture and are slightly sticky.

### Example 3

In this example all of the sugar and all of the flour of the control recipe is replaced with EDG in the same volume as the replaced flour

| | |
|---|---|
| EDG | 2 cups |
| Shortening | 1/2 cup |
| Milk | 1 cup |
| Vanilla | 1 teaspoon |
| Eggs | 3 |

The batter using EDG I has a viscosity of 11,600 cps (mPa.s). The batter using EDG II has a viscosity of 5000 cps (mPa.s). After baking using the procedure described in the control example, the cakes had very, very poor texture, were gummy and not all baked out. The cakes have a gummy wet portion in the center of hard crusts.

### Example 4

In this example, all of the sugar in the control recipe is replaced with an equal volume of EDG I. The batter has a viscosity of 18,400 cps (mPa.s). After baking, the cake does not have a "cake-like" texture and is more like a bread with many air holes.

### Example 5

In this example, 1/2 of the sugar in the control recipe is replaced with an equal volume of EDG I and EDG II respectively.

| | |
|---|---|
| Self-raising flour | 2 cups |
| Shortening | 1/2 cup |
| Milk | 1 cup |
| Vanilla | 1 teaspoon |
| Eggs | 3 |
| Sugar | 3/4 cup |
| EDG | 3/4 cup |

The batter containing EDG I has a viscosity of 18,000 cps (mPa.s). The batter with EDG II has a viscosity of 20,000 cps (mPa.s). The texture of the cakes are close to that of the control being a little more moist and slightly more sticky than the cakes of Example 2.

It will of course be understood that the present invention has been described above purely by way of example and that modifications of detail can be made within the scope of the invention.

## Claims

1. A sugar replacement comprising a blend of extensively depolymerised guar and a sweetness equivalent amount of an artificial sweetener, wherein the extensively depolymerised guar has a viscosity as measured as a 25 weight percent solution in water of less than about 1000 mPa.s at 25°C.

2. The sugar replacement of claim 1 wherein the guar solution has a viscosity of less than about 500 mPa.s.

3. The sugar replacement of claim 1 wherein the guar solution has a viscosity of about 50 to about 200 mPa.s.

4. A dry cake or cookie mix wherein a portion of the sugar bulk is replaced with extensively depolymerised guar having a viscosity as measured as a 25 weight percent solution in water at 25°C of less than about 1000 mPa.s.

5. The mix of claim 4 wherein the guar solution has a viscosity of less than about 500 mPa.s.

6. The mix of claim 4 wherein the guar solution has a viscosity of about 50 to about 200 mPa.s.

7. The mix of claim 4, 5 or 6 wherein from about 10 to about 100 percent of the sugar is replaced with the guar.

8. The mix of claim 7 wherein from about 40 to about 60 percent of the sugar is replaced with the sugar.

9. The use as a bulking agent in food of an extensively depolymerised guar that has a viscosity, as measured as a 25 weight percent solution in water, of less than about 1000 mPa.s at 25°C.

10. The use according to claim 9, wherein the said guar is an ingredient in a sugar-replacement composition or in a dry mix for the preparation of cakes, cookies, puddings, whipped toppings and, patisserie products.

## Patentansprüche

1. Zuckerersatz umfassend eine Mischung aus stark depolymerisiertem Guar und eine Süßeequivalenzmenge eines künstlichen Süßstoffs, bei dem das stark depolymerisierte Guar eine Viskosität, gemessen als eine Lösung von 25 Gew.-% in Wasser, von weniger als 1000 mPa.s bei 25° C hat.

2. Zuckerersatz nach Anspruch 1, bei dem die Guar-Lösung eine Viskosität von weniger als etwa 500 mPa.s hat.

3. Zuckerersatz nach Anspruch 1, bei dem die Guar-Lösung eine Viskosität von etwa 50 bis etwa 200 mPa.s hat.

4. Trockenmischung für Kuchen oder Plätzchen, bei der ein Teil der Zuckermenge durch stark depolymerisiertes Guar ersetzt wird, das eine Viskosität, gemessen als eine Lösung von 25 Gew.-% in Wasser bei 25°C, von weniger als 1000 mPa.s hat.

5. Mischung nach Anspruch 4, bei der die Guar-Lösung eine Viskosität von unter etwa 500 mPa.s hat.

6. Mischung nach Anspruch 4, bei der die Guar-Lösung eine Viskosität von etwa 50 bis etwa 200 mPa.s hat.

7. Mischung nach Anspruch 4, 5 oder 6, bei der etwa 10 bis etwa 100 % des Zuckers durch Guar ersetzt werden.

8. Mischung nach Anspruch 7, bei der etwa 40 bis etwa 60 % des Zuckers durch Guar ersetzt werden.

9. Anwendung eines stark depolymerisierten Guars als Füllmittel, das eine Viskosität, gemessen als eine Lösung von 25 Gew.-% in Wasser bei 25°C, von unter etwa 1000 mPa.s bei 25° C hat.

10. Anwendung nach Anspruch 9, bei der das Guar ein Bestandteil einer Zuckerersatzzusammenstellung oder einer Trockenmischung zur Herstellung von Kuchen, Plätzchen, Puddings, Schlagcremes und Konditoreiprodukten ist.

## Revendications

1. Succédané de sucre comprenant un mélange de guar largement dépolymérisé et une quantité équivalente de sucrosité d'un édulcorant artificiel dans lequel le guar largement dépolymérisé a une viscosité, mesurée sous la forme d'une solution de 25 % en poids dans l'eau, inférieure à environ 1000 mPa.s à 25°C.

2. Succédané de sucre selon la revendication 1, dans lequel la solution de guar possède une viscosité inférieure à 500 mPa.s.

3. Succédané de sucre selon la revendication 1, dans lequel la solution de guar possède une viscosité d'environ 50 à environ 200 mPa.s.

4. Mélange sec pour gâteaux ou gâteaux secs, dans lequel une partie de la charge de sucre est remplacée par du guar largement dépolymérisé ayant une viscosité, mesurée sous la forme d'une solution de 25 % en poids dans l'eau à 25°C, inférieure à environ 1000 mPa.s.

5. Mélange selon la revendication 4 dans lequel la solution de guar a une viscosité inférieure à environ 500 mPa.s.

6. Mélange selon la revendication 4 dans lequel la solution de guar a une viscosité d'environ 50 à environ 200 mPa.s.

7. Mélange selon la revendication 4, 5 ou 6 dans lequel environ 10 à environ 100 pour cent du sucre sont remplacés par du guar.

8. Mélange selon la revendication 7 dans lequel environ 40 à environ 60 pour cent du sucre sont remplacés par du guar.

9. Utilisation en tant qu'agent de charge alimentaire d'un guar largement dépolymérisé qui a une viscosité, mesurée sous la forme d'une solution de 25 % en poids dans l'eau, inférieure à environ 1000 mPa.s à 25°C.

10. Utilisation selon la revendication 9, dans laquelle ledit guar constitue un ingrédient dans une composition de substitution du sucre ou dans un mélange sec destiné à la préparation de gâteaux, gâteaux secs, puddings, nappages à base de crème fouettée et de produits pâtissiers.
